# EUROPÄISCHE PATENTANMELDUNG

(11) **EP 2 939 575 A1**
(43) Veröffentlichungstag der Anmeldung: **04.11.2015**
(21) Anmeldenummer: 15164774.0
(22) Anmeldetag: 23.04.2015
(51) Int. Cl.: A47J 29/06, B65D 85/32

(54) **EIERHALTER**

(30) Priorität: 28.04.2014 DE 102014105897
(71) Anmelder: Mack, Hermann, 36148 Kalbach (DE)
(72) Erfinder: Mack, Hermann, 36148 Kalbach (DE)
(74) Vertreter: Limbeck, Achim

(57) **Zusammenfassung**

Die vorliegende Erfindung betrifft einen Eierhalter, bestehend aus einem Aufnahmeteil (1) und an dem Aufnahmeteil (1) vorgesehenen muldenförmigen Ausformungen (10) zur Aufnahme von Eiern (2),
wobei die muldenförmigen Ausformungen (10) an dem Aufnahmeteil (1) eine entsprechend der Anordnung der Eier (2) in einer Eierverpackung (3) korrespondierend vorgesehene Anordnung aufweisen, wobei an dem Aufnahmeteil (1) gleichmäßig angeordnete Ausnehmungen (11) vorgesehen sind, welche zur Aufnahme der an einer Eierverpackung (3) vorgesehenen pyramidenartigen Ausbuchtungen (30) ausgestaltet sind,
wobei die Ausnehmungen (11) in ihrem Durchmesser so bemessen sind, dass die Außenwandung der Ausbuchtungen (30) erst bei vollständigem Überstülpen des Eierhalters über der Eierverpackung (3) an der Innenwandung bzw. Innenkante der Ausnehmungen (11) umlaufend anliegt.

## Beschreibung

### Technisches Gebiet

Die vorliegende Erfindung betrifft einen Eierhalter, bestehend aus einem Aufnahmeteil und an dem Aufnahmeteil vorgesehenen muldenförmigen Ausformungen zur Aufnahme von Eiern.

### Stand der Technik

Herkömmliche Eierverpackungen (auch Eierkartons oder Eierschachteln genannt) bestehen aus einem Aufnahmeteil und einem mit dem Aufnahmeteil klappbar verbundenen Deckel, wobei das Aufnahmeteil Ausformungen zur Aufnahme von Eiern aufweist.

Beim alltäglichen Gebrauch weisen derartige Eierverpackungen, welche größtenteils aus Pappmaschee oder Hartschaum hergestellt sind, eine Reihe von Nachteilen auf. Eierverpackungen sind konstruktionsbedingt und aufgrund ihres Materials in der Regel nicht für die Aufbewahrung in einem Kühlschrank geeignet oder zumindest schwer zugänglich, so dass die Eier in der Regel in speziellen Eierhaltern im Kühlschrank untergebracht werden.

Die Handhabung der Eierverpackung umfasst unter anderem Tätigkeiten wie das Bestücken oder das Umlagern, welches sich als umständlich erweist, da zur Unterbringung jedes einzelne Ei der Eierverpackung entnommen und in eine freie Aufnahme im Kühlschrank eingebracht werden muss. Ein weiterer Nachteil besteht darin, dass die Eierverpackungen materialbedingt nicht geeignet sind, Feuchtigkeit und größerer Hitze ausgesetzt zu werden; sie eignen sich mithin regelmäßig nicht zur Nutzung in einem Kochtopf oder dergleichen.

### Darstellung der Erfindung

Der vorliegende Erfindung liegt die Aufgabe zu Grunde, einen Eierhalter zu schaffen, welche die vorgenannten Nachteile ausräumt und welcher geeignet ist, die Einbringung der Eier besonders einfach und rasch durchführen zu können.

Erfingdungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Eierhalters sind in den abhängigen Unteransprüchen angegeben.

Die vorliegende Erfindung schließt die technische Lehre ein, dass Eierverpackungen regelmäßig eine gleichförmige Anordnung von pyramidenartigen Ausbuchtungen aufweisen, die der Eierverpackung die nötige Stabilität gibt.

Erfingdungsgemäß ist ein Eierhalter der eingangs genannten Art dadurch gekennzeichnet, dass die muldenförmigen Ausformungen an dem Aufnahmeteil eine entsprechend der Anordnung der Eier in einer Eierverpackung korrespondierend vorgesehene Anordnung aufweisen, wobei an dem Aufnahmeteil gleichmäßig angeordnete Ausnehmungen vorgesehen sind, welche zur Aufnahme der an einer Eierverpackung vorgesehenen pyramidenartigen Ausbuchtungen ausgestaltet sind.

Zum Einbringen der Eier in einer Eierverpackung wird der erfindungsgemäße Eierhalter kopfüber auf die Eier in der Eierverpackung gestülpt, wobei die an einer Eierverpackung regelmäßig vorgesehenen pyramidenortigen Ausbuchtungen in die an dem Aufnahmeteil gleichmäßig angeordnete Ausnehmungen hineinragen.

Dies hat den besonderen Vorteil, dass die pyramidenartigen Ausbuchtungen an der Eierverpackung quasi als Führungsmittel zum gleichmäßigen und exakten Überstülpen des Eierhalters auf der Eierverpackung verwendet werden können. Nach dem Überstülpen der Eier wird die Eierverpackung samt dem Eierhaller um 180° auf den Kopf gedrehet, so dass die Eier nun in den Ausformungen zur Aufnahme der Eier in dem Eierhalter aufgenommen sind.

Die Einbringung der Eier in den Eierhalter ist dadurch besonders einfach und rasch durchzuführen.

### Kurzbeschreibung der Zeichnungen

Weitere Ziele, Merkmale, Vorteile und Anwendungsmöglichkeiten des erfindungsgemäßen Eierhalters ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig.1 den erfindungsgemäßen Eierhalter in der Draufsicht;
Fig.2 eine Eierverpackung mit einem aufgesetztem Eierhalter.

### Ausführung der Erfindung

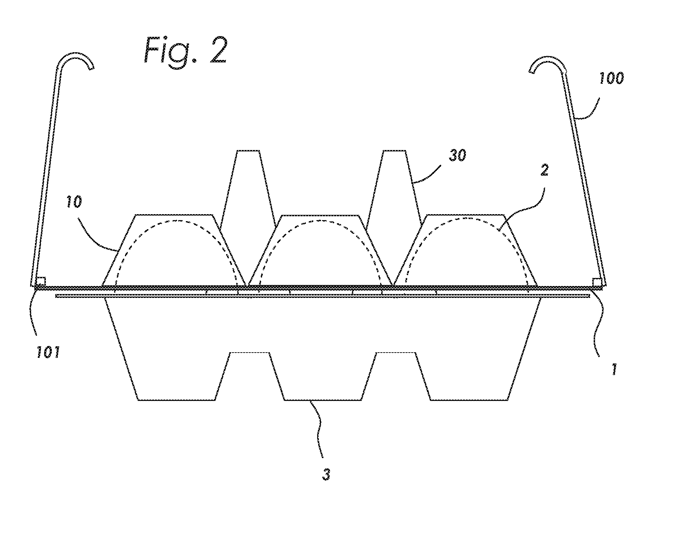

Fig.2. zeigt eine vorteilhafte Ausführungsform eines Eierhalters, welcher für die Aufnahme von zehn Eiern 2. ausgebildet ist.

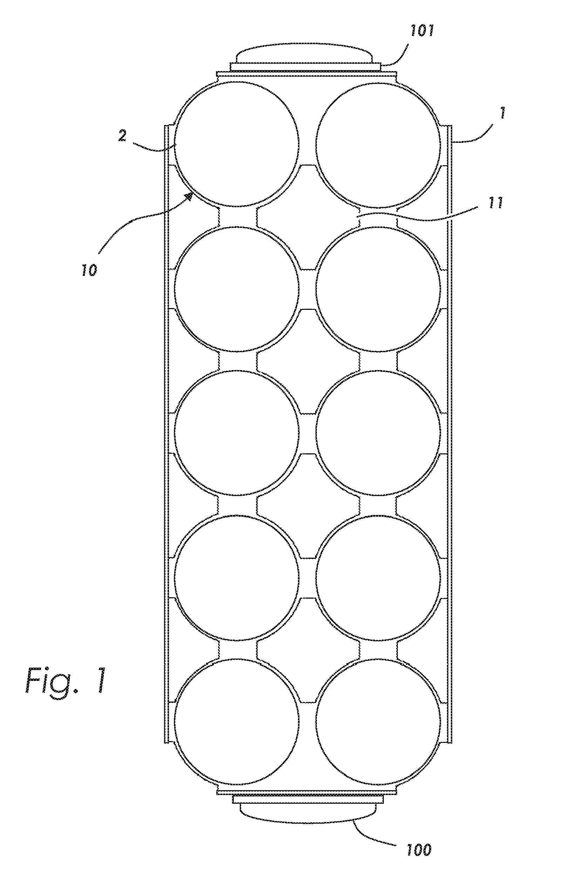

Wie aus Fig.1 ersichtlich, besteht der erfindungsgemäße Eierhalter aus einem Aufnahmeteil 1 und vorzugsweise zehn an dem Aufnahmeteil 1 vorgesehenen muldenförmigen Ausformungen 10 zur Aufnahme von Eiern 2. Je nach Verwendungszweck (insbesondere der Ausgestaltung der jeweils verwendeten Eierverpackung mit bspw. vier, sechs oder zehn Aufnahmen für Eier 2) kann der Eierhalter eine entsprechende Anzahl an muldenförmigen Ausformungen 10 aufweisen.

In einer weiteren vorteilhaften Ausführung ist es darüber hinaus Aufgabe der Erfindung, einen Eierhalter zu schaffen, welcher zur Unterbringung in einem Kühlschrank sowie zum Kochen der Eier in einem Kochtopf oder in einem dergleichen geeigneten Behältnis verwendet werden kann. Hierzu besteht der Eierhalter vorzugsweise aus einem wasser- und/oder hitzebeständigen Material wie Metall oder Kunststoff, welches ganz bevorzugt auch zur Verwerdung in einer Geschirrspülmaschine geeignet ist. Als Hitzebeständigkeit wird vorliegend die Widerstandsfähigkeit gegen hohe Temperaturen von mehr als mindestens 60° C bezeichnet.

Wie aus Fig.1 ersichtlich, weisen die muldenförmigen Ausformungen 10 an dem Aufnahmeteil 1 eine entsprechend der Anordnung der Eier 2 in einer (vorzugsweise handelsüblichen) Eierverpackung 3 korrespondierend vorgesehene Anordnung auf. Die Wandungen der Ausformungen 10 können dementsprechend eckig oder bogenförmig zu einem vollständigen Kreis geformt oder oval ausgestaltet sein.

Fig.2 zeigt eine weitere Ausführungsform eines auf einer Eierverpackung 3 aufgesetzten Eierhalters, welcher für die Aufnahme von sechs Eiern 2 ausgebildet ist.

Wie aus Fig.2 ersichtlich, weisen Eierverpackungen regelmäßig eine gleichförmige Anordnung von pyramidenartigen Ausbuchtungen 30 auf. An dem Aufnahmeteil 1 sind daher erfingdungsgemäß gleichmäßig angeordnete Ausnehmungen 11 vorgesehen (Fig.1), welche zur Aufnahme der an der Eierverpackung 3 vorgesehenen pyramidenartigen Ausbuchtungen 30 ausgestaltet sind.

Die Ausnehmungen 11 sind vorteilhaft in ihrem Durchmesser so bemessen, dass die Außenwandung der Ausbuchtungen 30 erst bei vollständigem Überstülpen des Eierhalters über der Eierverpackung 3, wie dies aus Fig.2 ersichtlich ist, an der Innenwandung bzw. Innenkante der Ausnehmungen 11 umlaufend anliegt. Der Eierhalter lässt sich durch die im Verhältnis zum Durchmesser der Spitzen der pyramidenartigen Ausbuchtungen 30 in ihrem Durchmesser größer ausgestalteten Ausnehmungen 11 damit leicht über diese stülpen, wobei eine exakte Ausrichtung des Eierhalters durch das spätere Anliegen der Ausnehmungen 11 an den pyramidenortigen Ausbuchtungen 30 erreicht wird.

Wie aus Fig.1 und aus Fig.2 ersichtlich, können an dem Eierhalter Halter 100 (bspw. Bügel) vorgesehen sein, welche an den Außenwandungen eines Behältnisses (bspw, eines Kochtopfes) aufgehängt werden können. Die Halter 100 sind - wie aus Fig.2 ersichtlich - vorzugsweise gelenkig an dem Aufnahmeteil 1 angeordnet, um einem Überstülpen des Eierhalters nicht hinderlich entgegenzustehen.

In einer bevorzugten Ausführung der Erfindung sind die Halder 100 abnehmbar an dem Aufnahmeteil 1 angeordnet. Hierzu sind an den Haltern 100 sowie an dem Aufnahmeteil 1 vorteilhaft entsprechend geeignete reversible Verbindungsmittel 101 vorgesehen. Als Verbindungsmittel kommen jegliche Materialien in Betracht, die wiederlösbar sind. Dies können beispielhaft aber nicht abschließend Steckverbindungen oder Klemmmittel sein. Wichtig ist neben der Wiederlösbarkeit auch der Umstand, dass sie in einfacher Weise gestaltet und anwendbar sind.

Der erfindungsgemäße Eierhalter beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Aufnahmeteil
- 2: Eier
- 3: Eierverpackung
- 10: muldenförmige Ausformungen an 1 zur Aufnahme von Eiern
- 11: Ausnehmungen an 1
- 30: pyramidenartige Ausbuchtungen an 3
- 100: Halter
- 101: Verbindungsmittel für 100

## Patentansprüche

1. Eierhalter, bestehend aus einem Aufnahmeteil (1) und an dem Aufnahmeteil (1) vorgesehenen muldenförmigen Ausformungen (10) zur Aufnahme von Eiern (2),
wobei die muldenförmigen Ausformungen (10) an dem Aufnahmeteil (1) eine entsprechend der Anordnung der Eier (2) in einer Eierverpackung (3) korrespondierend vorgesehene Anordnung aufweisen, wobei an dem Aufnahmeteil (1) gleichmäßig angeordnete Ausnehmungen (11) vorgesehen sind, welche zur Aufnahme der an einer Eierverpackung (3) vorgesehenen pyramidenartigen Ausbuchtungen (30) ausgestaltet sind,
wobei die Ausnehmungen (11) in ihrem Durchmesser so bemessen sind, dass die Außenwandung der Ausbuchtungen (30) erst bei vollständigem Überstülpen des Eierhalters über der Eierverpackung (3) an der innenwandung bzw. Innenkante der Ausnehmungen (11) umlaufend anliegt.

2. Eierhalter nach einem der vorangegangenen Ansprüche,
**dadurch gekennzeichnet,**
**dass** die Wandungen der Ausformungen (10) eckig oder bogenförmig zu einem vollständigen Kreis oder oval ausgestaltet sind.

3. Eierhalter nach einem der vorangegangenen Ansprüche,
**dadurch gekennzeichnet,**
**dass** an dem Eierhalter Halte (100) vorgesehen sind, welche an den Außenwandungen eines Behältnisses aufgehängt werden können.

4. Eierhalter nach Anspruch 5,
**dadurch gekennzeichnet,**
**dass** die Halter (100) gelenkig an dem Aufnahmeteil (1) angeordnet sind.

5. Eierhalter nach den Ansprüchen 3 und 4,
**dadurch gekennzeichnet,**
**dass** die Halter (100) abnehmbar an dem Aufnahmeteil (1) angeordnet sind.
